# FASCICULE DE BREVET EUROPEEN

(11) **EP 0 439 382 B1**
(45) Date de publication et mention de la délivrance du brevet: **22.07.1998**
(21) Numéro de dépôt: 91400059.1
(22) Date de dépôt: 11.01.1991
(51) Int. Cl.: H04N 5/59

(54) **Procédé et dispositif de limitation de courant d'un tube cathodique**
Verfahren und Vorrichtung zur Begrenzung eines Kathodenröhrestroms
Method and device for limiting the current of a cathode ray tube

(30) Priorité: 16.01.1990 FR 9000433
(43) Date de publication de la demande: 31.07.1991
(73) Titulaire: LABORATOIRE EUROPEEN DE RECHERCHES ELECTRONIQUES AVANCEES, SOCIETE EN NOM COLLECTIF, 92400 Courbevoie (FR)
(72) Inventeur: Pery, Antoine, F-92045 Paris la Défense (FR); Douziech, Patrick, F-92045 Paris la Défense (FR)
(74) Mandataire: Ruellan-Lemonnier, Brigitte

(56) Documents cités:
- EP-A- 0 283 561
- US-A- 4 253 110
- IBM TECHNICAL DISCLOSURE BULLETIN, vol. 27, vol. 3, août 1984, pages 1766-1768, New York, US; G.J. LING et al.: "Automatic brightness control for CRT"

## Description

La présente invention se rapporte à un procédé et à un dispositif de limitation de courant d'un tube cathodique, comme décrit dans la US-A-4 253 110.

Les téléviseurs sont équipés d'un système de limitation de courant de faisceau moyen ("ABCL" pour : "Average Beam Current Limiter) permettant à la fois d'obtenir des images suffisamment lumineuses (contraste et lumière), dans la mesure où le courant moyen reste inférieur à une certaine limite (par exemple 1,2 mA), et de réduire le contenu d'image (en général le contraste et/ou la lumière) lorsque l'image que l'on obtiendrait sans cela implique un courant de faisceau qui, à long terme, provoquerait un vieillissement prématuré du tube cathodique.

Pour cela, on détermine le courant de faisceau, par exemple soit en détectant le courant moyen au pied de la source de tension THT (très haute tension) soit en mesurant la somme des courants instantanés de chaque cathode et en l'intégrant.

La constante de temps dans tous les cas doit être :
- suffisamment courte pour qu'une transition brutale du contenu d'image ne provoque pas un courant trop important (quelques mA) pendant trop longtemps (pendant la durée de quelques trames) de façon que la source THT puisse fournir l'énergie correspondante (et aussi pour que le tube ne soit pas soumis à des intensités lumineuses trop élevées).
- suffisamment longue pour que les niveaux de lumière et de contraste (voire de saturation) restent pratiquement inchangés le long d'une trame ; ceci étant particulièrement difficile à réaliser dans le cas où la moitié supérieure d'une image est blanche (ou noire) et la moitié inférieure est noire (ou blanche respectivement).

La présente invention a pour objet un procédé permettant de limiter efficacement le courant de faisceau d'un tube cathodique dans tous les cas possibles, en particulier pour des transitions brutales du contenu d'image.

La présente invention a également pour objet un dispositif de mise en oeuvre du procédé de l'invention, dispositif simple et peu onéreux, et facile à réaliser en circuits intégrés.

Le procédé conforme à l'invention selon la revendication 1 consiste à mesurer la somme des courants des cathodes du tube cathodique pendant une trame et à modifier les commandes de contraste et/ou de luminosité du tube cathodique en fonction de la mesure uniquement pendant le temps de retour de trame. Selon un aspect du procédé de l'invention, en cas de dépassement exceptionnel par le courant de faisceau d'un seuil au-delà duquel des composants du téléviseur risqueraient d'être endommagés, on limite immédiatement ce courant tant qu'il a tendance à dépasser ledit seuil.

Le dispositif conforme à l'invention selon la revendication 4 comporte un circuit de mesure de la somme, éventuellement pondérée, des courants des cathodes du tube cathodique, relié à une entrée d'un premier comparateur à laquelle est également relié un premier condensateur en parallèle avec un interrupteur commandé par un circuit générant des impulsions de commande à partir des impulsions de retour trame, une autre entrée du premier comparateur étant reliée à une première tension de référence, la sortie du premier comparateur étant reliée à un second condensateur, qui est relié via une diode à une seconde tension de référence, la sortie du premier comparateur étant également reliée aux circuits de commande de luminosité et/ou de contraste du tube cathodique, l'entrée de validation du comparateur recevant des impulsions de retour trame.

La présente invention sera mieux comprise à la lecture de la description détaillée d'un mode de réalisation, pris à titre d'exemple non limitatif et illustré par le dessin annexé, sur lequel :
- la figure 1 est un chronogramme relatif à des circuits de limitation de courant de l'art antérieur,
- la figure 2 est un schéma simplifié d'un circuit de limitation de courant conforme à l'invention,
- la figure 3 est un chronogramme de signaux utilisés dans le circuit de la figure 2, et
- la figure 4 est un chronogramme montrant l'action du circuit de la figure 2.

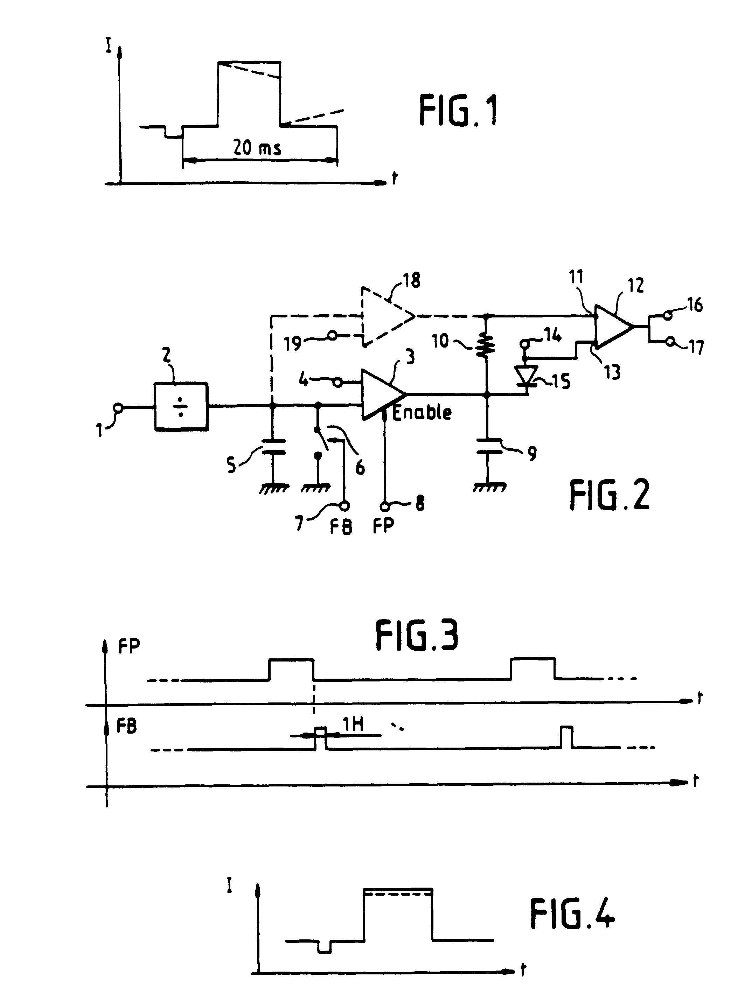

On a représenté en figure 1, en trait plein, une partie de signal vidéo correspondant à une image dont une moitié est noire et l'autre toute blanche. Selon cet exemple, la moitié supérieure de l'image est blanche (niveau vidéo maximum) et la moitié inférieure noire (niveau vidéo nul). On a représenté en traits interrompus l'action du circuit connu d'ABCL, à savoir l'effet de réduction de lumière et/ou de contraste pendant les premières 10 ms du signal vidéo, et l'effet d'augmentation de lumière et/ou de contraste pendant le reste de l'image, lorsque le circuit d'ABCL cesse d'agir.

Par conséquent, on peut assimiler l'action sur l'image comme une différentiation du signal vidéo.

Par contre, grâce au procédé de l'invention, dans les mêmes conditions, on obtient une diminution, constante, du niveau du blanc, et aucune action sur le niveau du noir (voir figure 4). Ce procédé de l'invention consiste à modifier l'action du circuit de limitation du courant de faisceau uniquement pendant le retour trame, et à ne pas modifier son action pendant tout le balayage d'une trame, ce qui supprime l'effet de différentiation précité, tout en permettant une action rapide en cas de nécessité, par exemple lors d'un changement brusque du contenu d'image.

On a représenté en figure 2, le schéma d'un mode de réalisation d'un circuit mettant en oeuvre ce procédé. La borne d'entrée 1 de ce circuit reçoit un courant proportionnel à la somme des courants de faisceau des trois canons du tube cathodique. De façon avantageuse, les composantes de cette somme peuvent être pondérées différemment les unes des autres. Bien entendu, dans le cas d'un tube monochrome, cette somme se réduit au courant de l'unique faisceau de ce tube. Cette borne peut être reliée aux collecteurs des transistors qui sont généralement montés en émetteurs-suiveurs entre les sorties en tension des étages vidéo finaux et les cathodes des canons du tube cathodique trichrome (bien entendu, s'il s'agissait d'un tube monochrome, on ne prélèverait que le courant de sa cathode unique).

La borne 1 est reliée à un diviseur de courant 2, dont le rapport de division est par exemple de 1/100. La sortie du diviseur 2 est reliée à une entrée d'un comparateur 3 réalisé à l'aide d'un amplificateur opérationnel linéaire, dont l'autre entrée 4 reçoit une tension de référence V1. La sortie du diviseur 2 est également reliée à une électrode d'un condensateur 5 dont l'autre électrode est reliée à la masse. En parallèle sur le condensateur 5, on branche un interrupteur commandé 6, dont l'entrée de commande est reliée à une borne 7 recevant des impulsions FB illustrées en figure 3. Les impulsions FB commandent la fermeture de l'interrupteur 6, donc le court-circuit et la décharge du condensateur 5. L'entrée de validation ("Enable") de l'amplificateur 3 est reliée à une borne 8 recevant les impulsions FP ("Frame Pulse") de retour trame. Comme indiqué en figure 3, les impulsions FB ont une durée égale au temps de balayage d'une ligne, et leur front montant arrive pratiquement simultanément avec le fond descendant des impulsions FP. Ces impulsions FB peuvent par exemple être produites par une bascule monostable déclenchée par le front descendant de FP.

La sortie en courant de l'amplificateur 3 est reliée d'une part à la masse via un condensateur 9, et d'autre part, via une résistance 10, à une première entrée 11 d'un comparateur 12. La deuxième entrée 13 du comparateur 12 est reliée à une borne 14 recevant une tension de référence V3. La borne 14 est reliée à l'anode d'une diode 15 dont la cathode est reliée au point commun de la résistance 10 et du condensateur 9. La sortie du comparateur 12 est reliée à deux bornes 16, 17. La borne 16 est reliée au circuit de commande de contraste du tube cathodique, et la borne 17 est reliée au circuit de commande de luminosité de ce tube cathodique. Ces circuits de commande sont bien connus en soi et ne sont pas représentés sur le dessin.

On a représenté en traits interrompus sur la figure 2 un circuit de sécurité qui peut être avantageusement adjoint au circuit de limitation décrit ci-dessus. Ce circuit additionnel comporte un comparateur 18 dont une entrée est reliée à la sortie du diviseur 2, et dont l'autre entrée est reliée à une borne 19 recevant une tension de référence V2. La sortie en courant du comparateur 18 est reliée à l'entrée 11 du comparateur 12.

Le fonctionnement du circuit de la figure 2 est le suivant. Le condensateur 5 est déchargé à la fin de chaque retour trame (fermeture de l'interrupteur 6 par les impulsions FB) et est chargé pendant l'aller trame par un courant, issu du diviseur 2, proportionnel au courant de faisceau total instantané. Bien entendu, dans le cas où l'on équipe le téléviseur d'un circuit tel que celui de la figure 2, pour chacun des faisceaux d'un tube trichrome, le courant de charge du condensateur 5 est proportionnel au courant du faisceau correspondant. Pendant le retour trame, la tension VC1 présente aux bornes du condensateur 5 est comparée à la tension de référence V1. Le condensateur 9 est chargé (ou déchargé) par un courant proportionnel à la différence algébrique VC1-V1. Tant que VC1<V1, le condensateur 9 est déchargé. La tension VC2 aux bornes du condensateur 9 est égale à V3-VD, VD étant le chute de tension due à la diode 15. Dès que VC1 dépasse V1, le condensateur 9 est chargé par un courant proportionnel à VC1-V1. Si la tension VC2 dépasse V3, les sorties 16 et 17 du comparateur 12 sont activées, et les commandes de réduction de contraste et/ou de luminosité agissent.

Le circuit est stable lorsque VC2 reste constante, ce qui est vrai pour VC1 = V1. Le seuil de limitation du courant de faisceau est défini pour cette dernière égalité. On peut fixer ce seuil en choisissant la valeur du condensateur 5 pour chaque application considérée. La valeur du condensateur 9 détermine la constante de temps du circuit. Si cette valeur est trop faible, le circuit oscille, car l'action de réduction est plus forte que ce qui est nécessaire et est donc aussitôt suivie d'une action en sens inverse (augmentation du courant de faisceau) ; si cette valeur est trop élevée, le circuit se stabilise au bout d'un grand nombre de trames, et n'est donc pas efficace à temps. Le bon choix de la valeur du condensateur 9 correspond à l'obtention d'un équilibre en un temps compris entre la durée d'une et de deux trames. Dans un mode de réalisation, les valeurs des condensateurs 5 et 9 sont d'environ 100 nF.

Le comparateur 18 est utilisé lorsque l'on veut obtenir une action plus rapide sur la lumière et/ou le contraste lors du dépassement d'un second seuil V2 supérieur à V1 et à V3, c'est-à-dire lorsque l'on estime que la constante de temps due au condensateur 9 est trop élevée dans le cas considéré.

Par conséquent, dès que la tension VC1, due à un courant de faisceau trop élevé (supérieur à quelques milliampères) dépasse le seuil V2, le comparateur 18 commande aussitôt le comparateur 12 (puisque V2>V3 et qu'il n'y a pas de circuits à constante de temps qui retarderaient la commande du comparateur 12 par le comparateur 18) qui à son tour commande aussitôt la réduction de la lumière et/ou du contraste du tube cathodique. Bien entendu, la valeur du seuil V2 est telle que le déblocage du comparateur 18 n'ait lieu qu'en cas d'augmentation exceptionnelle du courant de faisceau, mettant en danger des composants du téléviseur.

## Revendications

1. Procédé de limitation du courant de faisceau d'un tube cathodique, caractérisé en ce qu'il comporte les étapes de mesure de la somme des courants des cathodes du tube cathodique pendant une trame, et de modification des commandes de contraste et/ou de luminosité (16, 17) du tube cathodique en fonction de ladite mesure uniquement pendant l'intervalle de retour trame (FP).

2. Procédé selon la revendication 1, caractérisé en ce que la mesure représentant le courant de faisceau (VC1) est obtenue en intégrant la somme pondérée de courants proportionnels aux courants de faisceau de chaque cathode.

3. Procédé selon l'une des revendications précédentes, caractérisé en ce que lorsque la mesure de la somme des courants dépasse un seuil donné (V2) en cours de trame, lesdites commandes de contraste et/ou luminosité sont modifiées immédiatement.

4. Dispositif de limitation du courant de faisceau d'un tube cathodique, caractérisé par le fait qu'il comporte
un circuit (1,2) de mesure de la somme des courants des cathodes du tube cathodique, relié à une entrée d'un premier comparateur (3) à laquelle est également relié un premier condensateur (5) en parallèle avec un interrupteur (6) commandé par un circuit générant des impulsions de commande (FB) à partir des impulsions de retour trame, une autre entrée dudit premier comparateur étant reliée à une première tension de référence (V1), la sortie dudit premier comparateur étant reliée à un second condensateur (9) qui est relié via une diode (15) à une seconde tension de référence (V3),
la sortie du premier comparateur étant également reliée aux circuits de commande (12, 16, 17) de luminosité et/ou de contraste du tube cathodique, l'entrée de validation du comparateur recevant des impulsions de retour trame (FP).

5. Dispositif selon la revendication 4, caractérisé par le fait que les composantes de la somme des courants des cathodes sont pondérées différemment les unes des autres.

6. Dispositif selon la revendication 4 ou 5, caractérisé par le fait qu'il comporte un autre comparateur (18) dont une entrée est reliée à une tension de référence (V2), dont l'autre entrée est reliée au premier condensateur, et dont la sortie est reliée auxdits circuits (12, 16, 17) de commande de luminosité et/ou de contraste du tube cathodique.

7. Dispositif selon l'une des revendications 4, 5 ou 6, caractérisé par le fait que la valeur du second condensateur (9) est telle qu'elle permet d'obtenir la stabilisation du dispositif en un temps compris entre une et deux trames.

## Patentansprüche

1. Verfahren zur Begrenzung des Strahlstroms einer Kathodenstrahlröhre, gekennzeichnet durch folgende Schritte:
Messung der Summe der Strahlströme der Kathodenstrahlröhre während eines Hallbildes und Änderung der Steuersignale für den Kontrast und/oder die Helligkeit (16,17) der Kathodenstrahlröhre als Funktion der Messung nur während des Halbbild-Rücklaufintervalls (FP).

2. Verfahren nach Anspruch 1, dadurch gekennzeichnet, daß der den Strahlstrom darstellende Meßwert (VC1) durch Integration der gewichteten Summe von Strömen erfolgt, die den Strahlströmen jeder Kathode proportional sind.

3. Verfahren nach einem der vorangehenden Ansprüche, dadurch gekennzeichnet, daß dann, sobald der Meßwert der Summe der Strahlströme im Laufe des Halbbildes einen gegebenen Schwellwert (V2) übersteigt, die Steuerbefehle für den Kontrast und/oder die Helligkeit unverzüglich geändert werden.

4. Vorrichtung zur Begrenzung des Strahlstroms einer Kathodenstrahlröhre,
gekennzeichnet durch
eine Schaltung (1, 2) zum Messen der Summe der Strahlströme der Kathodenstrahlröhre, die mit einem Eingang eines ersten Komparators (3) verbunden ist, an den außerdem ein erster Kondensator (5) parallel mit einem Schalter (6) angeschlossen ist, der durch eine Schaltung gesteuert wird, die Steuerimpulse (FB) aus Halbbild-Rücklaufimpulsen erzeugt, wobei ein weiterer Eingang des ersten Komparators mit einer ersten Referenzspannung (V1) verbunden ist und der Ausgang des ersten Komparators mit einem zweiten Kondensator (9) verbunden ist, der über eine Diode (15) mit einer zweiten Referenzspannung (V3) verbunden ist,
wobei der Ausgang des ersten Komparators außerdem mit den Steuerschaltungen (12, 16, 17) für die Helligkeit und/oder den Kontrast der Kathodenstrahlröhre verbunden ist und der Freigeabeeingang des Komparators Halbbild-Rücklaufimpulse (FP) empfängt.

5. Vorrichtung nach Anspruch 4, dadurch gekennzeichnet, daß die Bestandteile der Summe der Kathodenströme unterschiedlich zueinander gewichtet sind.

6. Vorrichtung nach Anspruch 4 oder 5, dadurch gekennzeichnet, daß sie einen weiteren Komparator (18) enthält, dessen einer Eingang mit einer Referenzspannung (V2) verbunden ist, dessen anderer Eingang mit einem ersten Kondensator und dessen Ausgang mit den Schaltungen (12, 16, 17) für die Steuerung der Helligkeit und/oder des Kontrastes der Kathodenstrahlröhre verbunden ist.

7. Vorrichtung nach einem der Ansprüche 4 , 5, oder 6, dadurch gekennzeichnet, daß der Wert des zweiten Kondensators (9) so gewählt ist, daß er eine Stabilisierung der Vorrichtung innerhalb einer Zeit zwischen einem Halbbild und zwei Halbbildern bewirkt.

## Claims

1. Method of limiting the beam current of a cathode-ray tube, characterised in that it includes the steps of measuring the sum of the currents of the cathodes of the cathode-ray tube during a frame, and modifying the contrast and/or brightness commands (16, 17) of the cathode-ray tube as a function of the said measurement solely during the frame retrace interval (FP).

2. Method according to Claim 1, characterised in that the measurement representing the beam current (VC1) is obtained by integrating the weighted sum of currents proportional to the beam currents of each cathode.

3. Method according to one of the preceding claims, characterised in that, when the measurement of the sum of the currents exceeds a given threshold (V2) during a frame, the said contrast and/or brightness commands are modified immediately.

4. Device for limiting the beam current of a cathode-ray tube, characterised by the fact that it includes a circuit (1, 2) for measuring the sum of the currents of the cathode of the cathode-ray tube, connected to an input of a first comparator (3) to which there is also connected a first capacitor (5) in parallel with a switch (6) controlled by a circuit generating control pulses (FB) from frame retrace pulses, another input of the said first comparator being connected to a first reference voltage (V1), the output of the said first comparator being connected to a second capacitor (9) which is connected via a diode (15) to a second reference voltage (V3), the output of the first comparator also being connected to the brightness and/or contrast control circuits (12, 16, 17) of the cathode-ray tube, the enable input of the comparator receiving frame retrace pulses (FP).

5. Device according to Claim 4, characterised by the fact that the components of the sum of the currents of the cathodes are weighted differently from each other.

6. Device according to Claim 4 or 5, characterised by the fact that it includes another comparator (18), one input of which is connected to a reference voltage (V2), the other input of which is connected to the first capacitor, and the output of which is connected to the said brightness and/or contrast control circuits (12, 16, 17) of the cathode-ray tube.

7. Device according to one of Claims 4, 5 or 6, characterised by the fact that the value of the second capacitor (9) is such that it makes it possible to obtain the stabilisation of the device in a time lying between one and two frames.
